# EUROPEAN PATENT APPLICATION

(11) **EP 2 988 135 A2**
(43) Date of publication of application: **24.02.2016**
(21) Application number: 15180657.7
(22) Date of filing: 11.08.2015
(51) Int. Cl.: G01P 1/00, G01P 1/02, G01C 21/26

(54) **COMPACT INERTIAL MEASUREMENT UNIT WITH INTERFACE ADAPTER**

(30) Priority: 20.08.2014 US 201462039755 P; 01.12.2014 US 201414556574
(71) Applicant: Honeywell International Inc., Morris Plains, NJ 07950 (US)
(72) Inventor: Schlager, Matthew, Morristown, New Jersey 07962-2245 (US); Snyder, Scott, Morristown, New Jersey 07962-2245 (US); Van-Cao, Dang Tu, Morristown, New Jersey 07962-2245 (US)
(74) Representative: Houghton, Mark Phillip

(57) **Abstract**

Systems and method for reducing the size of inertial measurement units are disclosed. In one embodiment, an inertial measurement unit assembly comprises: at least one inertial sensor configured to output uncompensated sensor data; an inertial isolator configured to isolate the at least one inertial sensor; an interface adapter, wherein the interface adapter includes at least one calibration alignment pin that is used as a reference point between the at least one inertial sensor, the inertial interface adapter and a vehicle to which the inertial interface adapter is attached. Furthermore, the inertial measurement unit is configured to output the uncompensated sensor data to a processing device located external to the inertial measurement unit.

## Description

### CROSS-REFERENCE TO RELATED APPLICATIONS

This application claims the benefit of United States Provisional Patent Application Serial No. 62/039,755, filed on August 20, 2014, which is hereby incorporated herein by reference.

### BACKGROUND

Conventional inertial measurement units (IMUs) are 3-part systems. The first part is the inertial sensors which typically include three gyros and three accelerometers. The output of the six sensors are sent to the second part of the IMU, which is an on-board processor. The third part of the IMU is the mechanical housing that not only houses the inertial sensors and the on-board processor, but also provides a set of exterior reference datums, usually in the form of alignment pins that are used to attach the IMUto a vehicle while retaining the IMU alignment calibration.

This approach has typically been acceptable for end users of the IMU because sufficient physical volume has been available to accommodate the 3-part system. However, with the progression of smaller end user platforms, such as unmanned aerial vehicles (UAVs), the physical volume to accommodate an IMU that contains inertial sensors, a processor board and mechanical housing is becoming less available.

For the reasons stated above and for the reasons stated below which will become apparent to those skilled in the art upon reading and understanding the specification, there is a need in the art for improved systems and methods of reducing the size of IMUs, so they can be better accommodated in vehicles or devices that have limited space.

### SUMMARY

The Embodiments of the present disclosure provide systems and method for reducing the size of IMUs and will be understood by reading and studying the following specification.

In one embodiment, an inertial measurement unit assembly comprises: at least one inertial sensor configured to output uncompensated sensor data; an inertial isolator configured to isolate the at least one inertial sensor; an interface adapter, wherein the interface adapter includes at least one calibration alignment pin that is used as a reference point between the at least one inertial sensor, the inertial interface adapter and a vehicle to which the inertial interface adapter is attached; and wherein the inertial measurement unit is configured to output the uncompensated sensor data to a processing device located external to the inertial measurement unit.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a block diagram of an example vehicle incorporating a compact inertial measurement unitassembly with an interface adapter and an inertial isolator.
Figure 2 is a diagram of an example compact inertial measurement unitassembly with aninterface adapter and an inertial isolator.
Figure 3 is a flow diagram of an example method for implementing a compact inertial measurement unit assembly with an interface adapter and an inertial isolator.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

As stated above, there is a need in the art for improved systems and methods of reducing the size of IMUs, so that vehicles with limited space can accommodate the IMUs. The embodiments herein provide a "compact IMU assembly" as a solution. As used herein, the term vehicle refers to any device on which the compact IMU assembly is implemented. For example, a vehicle can include an aircraft, automobile, missile, handheld device, etc.

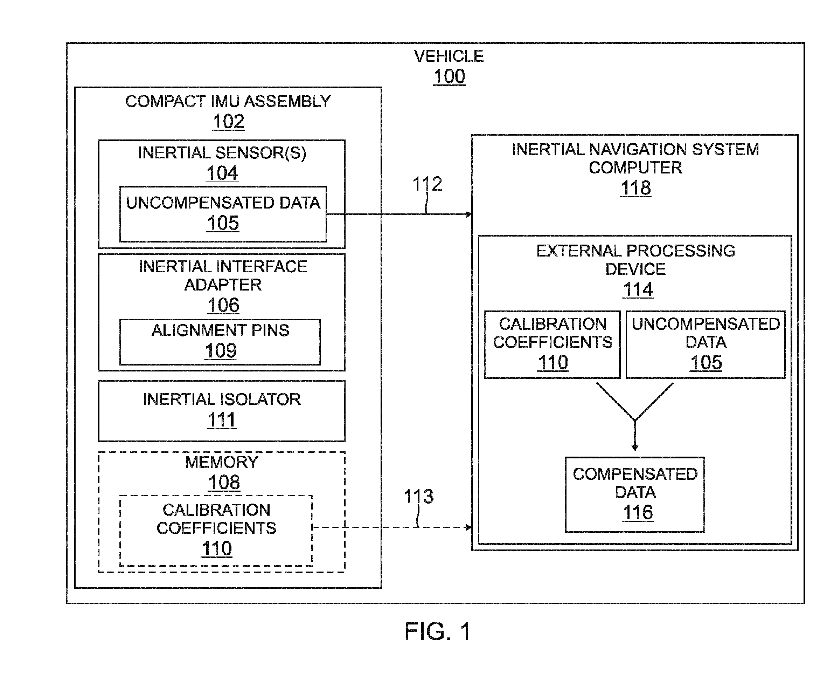

Figure 1 is a block diagram of an example vehicle 100 that includes a compact IMU assembly 102. The compact IMUassembly 102 includes one or moreinertial sensors 104, an interface adapter 106 and an inertial isolator 111. The interface adapter 106 mechanically couples the compact IMUassembly 102 to the vehicle 100 and the inertial isolator 111 isolates the at least one inertial sensor 104, as discussed in more detail below. Moreover, the compact IMU assembly 102 is electrically connected to the vehicle 100. The compact IMU assembly 102 is also communicatively coupled to a processing device 114 located external to the compact IMU assembly 102. The external processing device 114 located external to the compact IMU assembly 102 will also be referred to herein as the external processing device 114. In some embodiments, the external processing device 114 is included in the vehicle 100. In other embodiments, the external processing device 114 is not included in the vehicle 100. The uncompensated data 105 produced by the compact IMU assembly 102 can be sent to the external processing device 114 via a data stream 112.Moreover, calibration coefficients 110 can be loaded onto the external processing device 114, which the external processing device 114 can use to compute compensated data 116 from the uncompensated data 105. The compensated data 116 can be used to determine attitude reference data of the vehicle 100, such as acceleration, velocity, rotation, and position information.

In some embodiments, the one or moreinertial sensors 104 include both rotation sensors and acceleration sensors. In exemplary embodiments, the one or more inertial sensors 104 include three rotation sensor and three acceleration sensors, wherein each of the rotation sensors are orthogonal to one another and each of the three acceleration sensors are orthogonal to one another. The rotation sensors are also referred to herein as gyros. The gyros can be of any kind, including, but not limited to, ring laser gyros, fiber optic gyros, and spinning mass gyros. The acceleration sensors can be any of the accelerometers known in the art.

The one or more inertial sensors 104 are configured to produceuncompensated data 105 measured by the one or more inertial sensors 104. Using calibration coefficients 110, compensated data 116 can be derived using the uncompensated data 105. As stated above, the compensated data 116 can then be used to determine the attitude of the vehicle 100 on which the compact IMU assembly 102 is installed.

The one or moreinertial sensors 104are calibrated during the assembly of the sensors into the compact IMU assembly 102. In conventional IMUs, the coefficients derived from the calibration of theone or more inertial sensors 104 (referred to herein as calibration coefficients 110) are loaded onto a processing device included in the conventional IMU. The processing device onboard the conventional IMU then uses calibration coefficients to compensate the raw measurements taken by inertial sensors. The compensated data is then transferred via a synchronous data stream to a vehicle's processing unit, where the attitude of the vehicle is determined. The synchronous data stream is usually sent over a differential interface, such as the RS-485 protocol.

On the contrary, in the embodiments described herein, the compact IMU assembly 102 does not include a processing device. Instead, the compact IMU assembly 102 is communicatively coupled to a processing device 114 located external to the compact IMU assembly 102. The calibration coefficients 110 are loaded onto the external processing device 114 and the compact IMU assembly 102 is configured to send the uncompensated data 105 to the external processing device 114 via a data stream 112. In some embodiments, the data stream is an asynchronous serial data stream 112. In other embodiments, other types of data streams 112 can be used, such as Universal Serial Bus (USB), Ethernet and/or wireless transmission. As a result, the compactIMU assembly 102 can take up less volume than a conventional IMU because it does not include a processor.

In some embodiments, the calibration coefficients 110 determined by the manufacturer of the compact IMU assembly 102 can be delivered to the purchaser of the compact IMU assembly 102 when the compact IMU assembly 102 is delivered. The purchaser of the compact IMU assembly 102 will then load the calibration coefficients 110 onto the external processing device 114. In other embodiments, the calibration coefficients 110 can be stored on memory 108 included in the compact IMU assembly 102. The calibration coefficients 110 can then be sent to the external processing device 114 via a data stream 113. In some embodiments, the data stream 113 containing the calibration coefficients 110 is sent over the same interface and physical medium as the data stream 112 containing the uncompensated data 105. In other embodiments, the calibration coefficients 110 are sent over a different interface than the data stream 112 for the uncompensated data 105. In some embodiments, the data stream 113 containing the calibration coefficients 110 can be an asynchronous data stream.

In order for the compact IMU assembly 102 to yield useful compensated data 116, the orientation of the one or more inertial sensors 104 relative to the compact IMU assembly 102 must be known. In some embodiments, an interface adapter 106 and alignment pins 109 are used for this purpose. In particular, the position and orientation of the inertial sensors 104 relative to the inertial interface adapter 106 is contained within the calibration coefficients 110,which is utilized by the external processing device 114 to produce the compensated data 116 from the uncompensated data 105.

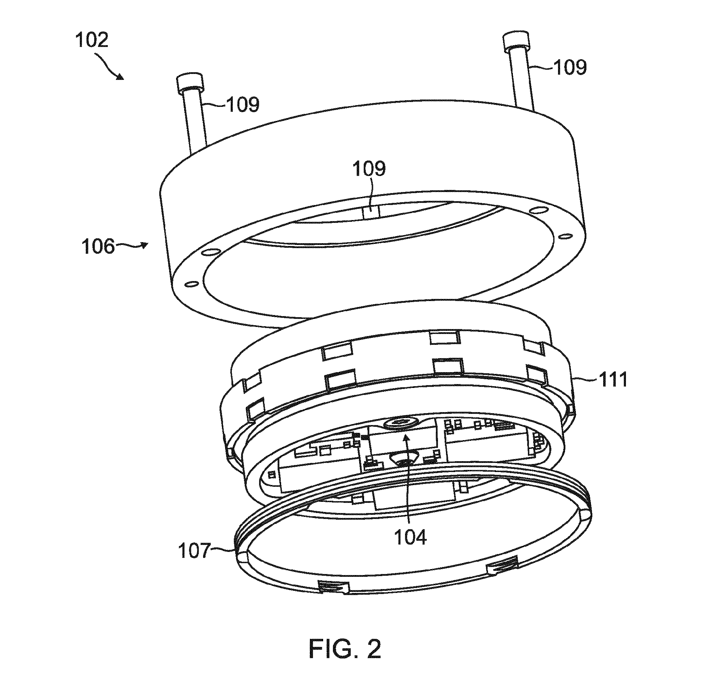

Figure 2 is a diagram of an example compact IMU assembly 102 that includes an interface adapter 106 and an inertial isolator 111.As stated above, the interface adapter 106 is used to orientatethe one or more inertial sensors 104 in a manner such that the position and orientation of the one or more inertial sensors 104 relative to the interface adapter 106 is known. Furthermore, the position and orientation of the interface adapter 106 relative to a vehicle 100 on which the interface adapter 106 is mounted is known.The compact IMU assembly 102 also includes a spanner nut 107 to lock the oneor more inertial sensors 104 into the interface adapter 106.

The IMU assembly 102 also include an inertial isolator 111. An example of an inertial isolator 111 that can be incorporated into the IMU assembly 102 is described in more detail in US Application No. 13/538,235 which is incorporated herein by reference. As stated in the US Application No. 13/538,235, theinertial isolator 111 is composed of an elastomer that is disposed between the inertial sensors 104 and the interface adapter 106 and mechanically couples the inertial sensors 104 to the interface adapter 106. The inertial isolator 111 allows displacement (i.e., relative motion) between the inertial sensors 104 and the interface adapter 106. Furthermore, the inertial isolator 111 acts as a passive isolation system to absorb motion related energy from the interface adapter 106 in order to reduce energy transfer from the interface adapter 106 to the inertial sensors 104.

In some embodiments, the inertial isolator 111 has a generally annular shape with the inertial sensors 104 connected to the inner side of the annular shape and the interface adapter 106 connected to the outer side of the annular shape. In some embodiments, the inertial isolator 111 is a monolithic structure having the desired features discussed above (e.g., absorbs related energy and allows displacement) and shape (e.g., annular). In other embodiments, the inertial isolator 111 is composed of multiple sections disposed between the interface adapter 106 and the inertial sensors 104. The multiple sections of the isolator can be disposed such that the multiple sections (e.g., discrete and discontinuous elements) collectively form the desired shape of the isolator (e.g., a generally annular shape).

The interface adapter 106 also includes one or more alignment pins 109.The alignment pins 109 are configured to act as a common known reference point between the inertial sensors 104, the interface adapter 106 and vehicle 100 on which the compact IMU assembly 102is mounted. The common known reference point of the alignment pins 109 can be stored in the calibration coefficients 110, which can then be used by the external processing device 114 to compute compensated data 116 from the uncompensated data 105 produced by the inertial sensors 104. The compensated data 116 can then be used to compute accurate attitude data for the vehicle 100, as discussed above.

In the embodiments herein, the interface adapter 106 can be made smaller than the housing that is used for conventional IMU implementations since the compact IMU assembly 102 described herein does not include a processing device. Therefore, the compact IMU assembly 102 in the present disclosure has a smaller volume than in conventional IMUs. In some exemplary embodiments, the compact IMU assembly 102 can be approximately one-half to three-fifths the volume of a conventional IMU that includes a processing device.

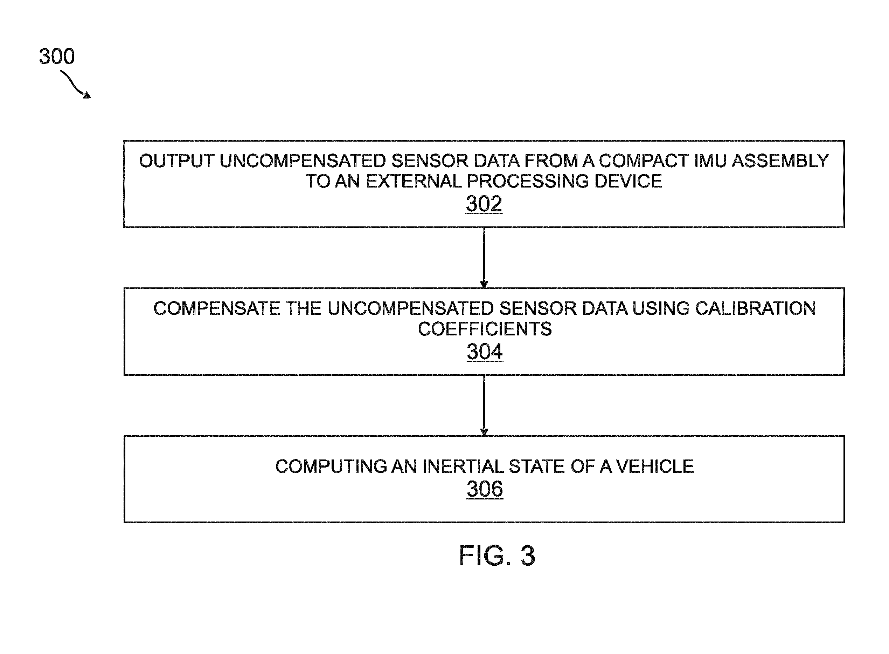

Figure 3 is a flow diagram of an example method 300 for implementing an inertial measurement unit that includes a compact IMU assembly, wherein the compact IMU assembly includes an interface adapter and an inertial isolator. The method 300 comprises outputting uncompensated sensor data, from at least one inertial sensor that is included in a compact inertial measurement unit (IMU) assembly with an interface adapter and an inertial isolator, to a processing device communicatively coupled to the compact IMU assembly and located external to the compact IMU assembly (block 302). In some embodiments, the uncompensated sensor data can have some or all of the same characteristics as the uncompensated sensor data 105 discussed above. Furthermore, the compact IMU assembly, the interface adapter and the inertial isolator can have some or all of the same characteristics as the compact IMU assembly 102, the interface adapter 106 and the inertial isolator 111 discussed above, respectively.

Moreover, in some embodiments, the uncompensated sensor data can be output to the processing device in the same way that the uncompensated sensor data 105 is output above. For example, in some embodiments, the uncompensated sensor data can be output to the processing device using a data stream, similar to the data stream 112 discussed above, including an asynchronous serial data stream.

Method 300 further comprises compensating the uncompensated sensor data using calibration coefficients in the processing device, wherein the calibration coefficients include a position and orientation of the at least one inertial sensor in relation to the interface adapter (block 304). In some embodiments, the processing device can have some or all of the same characteristics as the processing device 114 discussed above. For example, the processing device can be included in an inertial navigation system computer that is installed on a vehicle, which is the same vehicle that the inertial sensors are installed on that produce the uncompensated data. However, the processing device is not included in the inertial measurement unit that includes the inertial sensors that produce the uncompensated data.

Method 300 further comprises computing an inertial state of a vehicle on which the compact IMU assembly is installed using the compensated sensor data (block 306). In some embodiments, the inertial state of the vehicle includes at least one of the following: acceleration, velocity, rotation and position of the vehicle.

In some embodiments, method 300 can further compriseoutputting calibration coefficients from the compact IMU assembly to the processing device. In some embodiments, the calibration coefficients can be sent over a data stream, similar to the data streams 112, 113 discussed above, including an asynchronous data stream. In some other embodiments, the correlation coefficients can be provided to the purchaser of the compact IMU assembly with the compact IMU assembly and loaded on to the processing device by the purchaser, prior to the outputting of uncompensated sensor data from the compact IMU assembly to the processing device.

The memory used in the present systems and methods can be any appropriate tangible and non-transitory processor readable medium used for storage of processor readable instructions or data structures. Suitable processor readable media can include tangible media such as magnetic or optical media. For example, tangible media can include physical devices such as, but not limited to a conventional hard disk, compact disk (e.g., read only or rewritable), or non-volatile media such as random access memory (RAM) including, but not limited to, synchronous dynamic random access memory (SDRAM), double data rate (DDR) RAM, RAMBUS dynamic RAM (RDRAM), static RAM (SRAM), etc.), read only memory (ROM), electrically erasable programmable ROM (EEPROM), and flash memory, etc.

A processing device used in the present systems and methods can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The processing device can also include functions with software programs, firmware, or other computer readable instructions for carrying out various process tasks, calculations, and control functions used in the present method and system.

One or more act described in the present methods can be implemented by computer executable instructions, such as program modules or components, which are executed by at least one processor. Generally, program modules include routines, programs, objects, data components, data structures, algorithms, and the like, which perform particular tasks or implemented particular abstract data types.

Instructions for carrying out the various process tasks, calculations, and generation of other data used in operation of the methods described herein can be implemented in software, firmware, or other computer- or processor-readable instructions. These instructions are typically stored on any appropriate computer program product that includes a computer readable medium used for storage of computer readable instructions or data structures. Such a computer readable medium can be any available media that can be accessed by a general purpose or special purpose computer or processor, or any programming logic device.

### EXAMPLE EMBODIMENTS

Example 1 includes an inertial measurement unit assembly comprising: at least one inertial sensor configured to output uncompensated sensor data; an inertial isolator configured to isolate the at least one inertial sensor; an interface adapter, wherein the interface adapter includes at least one calibration alignment pin that is used as a reference point between the at least one inertial sensor, the inertial interface adapter and a vehicle to which the inertial interface adapter is attached; and wherein the inertial measurement unit is configured to output the uncompensated sensor data to a processing device located external to the inertial measurement unit.

Example 2 includes the inertial measurement unit of Example 1, further comprising a spanner nut configured to secure the one or more inertial sensors to the interface adapter.

Example 3 includes the inertial measurement unit of any of Examples 1-2, wherein the inertial measurement unit is configured to output the uncompensated sensor data to the processing device over an asynchronous serial data stream.

Example 4 includes the inertial measurement unit of any of Examples 1-3, further comprising memory configured to store a plurality of calibration coefficients; and wherein the inertial measurement unit is configured to output the plurality of calibration coefficients to the processing device.

Example 5 includes the inertial measurement unit of Example 4, wherein the inertial measurement unit is configured to output the plurality of calibration coefficients to the processing device over an asynchronous serial data stream.

Example 6 includes the inertial measurement unit of any of Examples 1-5, wherein the at least one inertial sensors comprises: three rotation sensors, wherein each of the three rotation sensors are orthogonal to each other; and three acceleration sensors, wherein each of the three acceleration sensors are orthogonal to each other.

Example 7 includes a system comprising: a processing device; and an inertial measurement unit communicatively coupled to the processing device, wherein the processing device is physically located external to the inertial measurement unit; wherein the inertial measurement unit comprises: at least one inertial sensor configured to output uncompensated sensor data; an inertial isolator configured to isolate the at least one inertial sensor; an interface adapter, wherein the interface adapter includes at least one calibration alignment pin that is used as a reference point between the at least one inertial sensor, the inertial interface adapter and a vehicle to which the inertial interface adapter is attached; and wherein the inertial measurement unit is configured to output the uncompensated sensor data to the processing device; and wherein the processing device is configured to receive the uncompensated sensor data and compensate the uncompensated sensor using calibration coefficients.

Example 8 includes the system of Example 7, further comprising a spanner nut configured to secure the one or more inertial sensors to the interface adapter.

Example 9 includes the system of any of Examples 7-8, wherein the inertial measurement unit is configured to output the uncompensated sensor data to the processing device over an asynchronous serial data stream.

Example 10 includes the system of any of Examples 7-9, wherein the inertial measurement unit further comprises memory configured to store a plurality of calibration coefficients; and wherein the inertial measurement unit is configured to output the plurality of calibration coefficients to the processing device.

Example 11 includes the system of Example 10, wherein the inertial measurement unit is configured to output the plurality of calibration coefficients to the processing device over an asynchronous serial data stream.

Example 12 includes the system of any of Examples 7-11, wherein the at least one inertial sensors comprises: three rotation sensors, wherein each of the three rotation sensors are orthogonal to each other; and three acceleration sensors, wherein each of the three acceleration sensors are orthogonal to each other.

Example 13 includes the system of any of Examples 7-12, wherein the processing device is included in an inertial navigation system computer.

Example 14 includes the system of Example 13, wherein the inertial navigation system computer computes an acceleration, velocity, rotation and position of a vehicle based on the compensated sensor data.

Example 15 includes a method comprising: outputting uncompensated sensor data, from at least one inertial sensor that is included in a compact inertial measurement unit (IMU) assembly with an interface adapter and an inertial isolator, to a processor device communicatively coupled to the compact IMU assembly and located external to the compact IMU assembly; and compensating the uncompensated sensor data using calibration coefficients in the processing device, wherein the calibration coefficients include a position and orientation of the at least one inertial sensor in relation to the interface adapter; and computing an inertial state of a vehicle on which the compact IMU assembly is installed using the compensated sensor data.

Example 16 includes the method of Example 15, wherein the uncompensated sensor data is output to the processing device using an asynchronous serial data stream.

Example 17 includes the method of any of Examples 15-16, further comprising outputting calibration coefficients from the compact IMU assembly to the processing device.

Example 18 includes the method of Example 17, wherein the calibration coefficients are output to the processing device using an asynchronous serial data stream.

Example 19 includes the method of any of Examples 15-18, further comprising: providing calibration coefficients to a purchaser of the compact IMU assembly; and loading the calibration coefficients onto the processing device, prior to outputting uncompensated sensor data from the compact IMU assembly to the processing device.

Example 20 includes the method of any of Examples 15-19, wherein computing an inertial state includes computing at least one of the following: acceleration, velocity, rotation and position of the vehicle.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An inertial measurement unit assembly (102) comprising:
at least one inertial sensor (104) configured to output uncompensated sensor data (105);
an inertial isolator (111) configured to isolate the at least one inertial sensor (104);
an interface adapter (106), wherein the interface adapter (106) includes at least one calibration alignment pin (109) that is used as a reference point between the at least one inertial sensor (104), the inertial interface adapter (106) and a vehicle (100) to which the inertial interface adapter (106) is attached; and
wherein the inertial measurement unit (102) is configured to output the uncompensated sensor data (105) to a processing device (114) located external to the inertial measurement unit (102).

2. The inertial measurement unit of claim 1, further comprising a spanner nut (107) configured to secure the one or more inertial sensors (104) to the interface adapter (106).

3. The inertial measurement unit of claim 1, wherein the inertial measurement unit (102) is configured to output the uncompensated sensor data (105) to the processing device (114) over an asynchronous serial data stream.

4. The inertial measurement unit of claim 1, further comprising memory (108) configured to store a plurality of calibration coefficients (110); and
wherein the inertial measurement unit (102) is configured to output the plurality of calibration coefficients (110) to the processing device (114).

5. The inertial measurement unit of claim 4, wherein the inertial measurement unit (102) is configured to output the plurality of calibration coefficients (110) to the processing device (114) over an asynchronous serial data stream.

6. A method comprising:
outputting uncompensated sensor data, from at least one inertial sensor that is included in a compact inertial measurement unit (IMU) assembly with an interface adapter and an inertial isolator, to a processor device communicatively coupled to the compact IMU assembly and located external to the compact IMU assembly (302); and
compensating the uncompensated sensor data using calibration coefficients in the processing device, wherein the calibration coefficients include a position and orientation of the at least one inertial sensor in relation to the interface adapter (304); and
computing an inertial state of a vehicle on which the compact IMU assembly is installed using the compensated sensor data (306).

7. The method of claim 6, wherein the uncompensated sensor data is output to the processing device using an asynchronous serial data stream.

8. The method of claim 6, further comprising outputting calibration coefficients from the compact IMU assembly to the processing device.

9. The method of claim 8, wherein the calibration coefficients are output to the processing device using an asynchronous serial data stream.

10. The method of claim 6, further comprising:
providing calibration coefficients to a purchaser of the compact IMU assembly; and
loading the calibration coefficients onto the processing device, prior to outputting uncompensated sensor data from the compact IMU assembly to the processing device.
